# EUROPEAN PATENT SPECIFICATION

(11) **EP 2 592 025 B1**
(45) Date of publication and mention of the grant of the patent: **09.07.2014**
(21) Application number: 12191879.1
(22) Date of filing: 08.11.2012
(51) Int. Cl.: B65G 47/244, B65H 15/00

(54) **Apparatus and method for controlling and modifying the orientation of products in book format conveyed in a continuous conveying flow**
Vorrichtung und Verfahren zur Steuerung und Modifizierung der Ausrichtung von in einem kontinuierlichen Förderfluss gefördeten Produkten in Buchformat
Appareil et procédé permettant de commander et de modifier l'orientation de produits en format livre acheminés dans un flux de transport continu

(30) Priority: 11.11.2011 IT MI20112055
(43) Date of publication of application: 15.05.2013
(73) Proprietor: SITMA MACHINERY S.p.A., 41057 Spilamberto (MO) (IT)
(72) Inventor: Ballestrazzi, Aris, 41056 Savignano sul Panaro (MO) (IT); Tassi, Lamberto, 41056 Savignano sul Panaro (MO) (IT)
(74) Representative: Cosenza, Simona

(56) References cited:
- WO-A1-2010/127148
- US-A- 6 155 775

## Description

The present invention refers to an apparatus and to a method for controlling and modifying the orientation of products in book format conveyed in a continuous conveying flow.

The present invention also refers to a machine and to a method for packaging products in book format, in particular a machine and a method for inserting inserts between the pages of such products, respectively comprising the apparatus and the method for controlling and modifying the orientation of the products themselves according to the present invention.

By products in book format it is intended to indicate products consisting of a fascicle of pages or printed sheets that has a front face, a rear face, at least one closed side, which is normally called "back" or "spine", and at least one open side opposite and parallel to the back.

Products in book format are, for example, newspapers, dailies, magazines, periodicals, printed publications in general.

For some time it has been common to insert one or more extractable inserts consisting, for example, of flyers, between the pages of such products.

In general, such inserts are inserted under the front or back cover page of the products themselves.

For this purpose inserting machines are known that comprise, in general terms, a continuous conveyor arranged to convey a succession of products in book format spaced apart from one another, means for opening the single products by lifting their top page, i.e. the one facing upwards, and means for inserting one or more inserts into the opening thus created. The products, with the inserts inserted inside them, are then sent to a subsequent collection or packaging station.

The means for opening and inserting are generally shaped like shaped plates, knives, blades, "swords", rotary suction cups or similar and they are arranged to operate along one of the two sides of the continuous conveyor.

Therefore, it is necessary for the single products to be arranged on the continuous conveyor with the back parallel to the conveying direction and the open side opposite to the back facing the means for opening and inserting.

Then, if it is wished to insert the inserts under the front cover page or under the back cover page, it is also necessary for the products to be arranged with the front or back cover page facing upwards, the opposite cover page, back or front respectively, being rested on the continuous conveyor.

In known inserting machines the products are fed to the continuous conveyor by a feed assembly that receives in inlet packs or stacks of products and singularizes them to feed them on the continuous conveyor in succession one after the other and spaced apart with the back and the opposite side oriented parallel to the conveying direction.

However, sometimes some products are not correctly oriented for the insertion of the inserts inside them, arriving with the back, instead of the opposite open side, along the side of the continuous conveyor facing towards the means for opening and inserting or with the back cover page facing upwards, whereas it is required to insert the insert under the front cover page. Generally, indeed, the products of each pack or stack are piled on top of one another so that the back of each of them lies on the same side of the pack or stack. The stacks of products are then arranged on benches alongside one another and rotated by 180° with respect to one another on the horizontal plane so as to support one another.

An automated manipulator is arranged to pick up the products in packs or stacks and place them in inlet to the feed assembly of the line as picked up, without, however, modifying their orientation if not suitable for carrying out the subsequent insertion operations or other packaging.

Currently, a trained worker of the inserting machine takes care of manually modifying the arrangement/orientation of the products so that each of them is correctly arranged/oriented to carry out the insertion or other packaging operations.

This involves the use of expensive labour and a slowing down of the packaging speed of the machine itself, with consequent disadvantageous reduction in productivity. The operations of checking and possibly modifying the orientation of the products are left to the attention and expertise of an operator. Therefore, it is possible that, for whatever reason, like, for example, a moment of distraction or an incorrectly performed manipulation, some products can slip through such operations and arrive with an incorrect orientation to the means for opening and inserting, with consequent malfunctions or stopping of the machine itself.

US 6,155,775 discloses an apparatus having the features of the preamble of claim 1 and relates to an apparatus for singularizing books stacked in a plurality of stacks arranged one beside the other on transportation pallets and feeding the books thus singularized on a conveyor that conveys them towards a processing station so that each book is oriented with its back arranged orthogonal to the conveying direction of the conveyor and at the front with respect to the conveying sense. The books in each single stack are rotated by 180° with respect to one another and, before being fed to the transport conveyor, are manipulated by a re-orientation station to which they are fed with the back arranged orthogonally to the conveying direction. The re-orientation station comprises a plurality of rotary plates each of which is intended to be fed with one book at a time. The rotary plates are conveyed by a continuous conveyor and each of them is rotated by 90° in one sense or in the opposite sense according to the signal of a sensor that detects the orientation of the book fed onto it.

WO2010/1271148 refers to a printing press that comprises a plurality of printing units operating on a continuous band, a folding unit of the band thus printed and that, in turn, comprises a cutting assembly of the printed band into a plurality of printed products and an assembly for modifying the orientation of the printed products. The assembly for modifying the orientation of the printed products comprises a unit made up of a first pair of so-called "nip-rolls" (rolls arranged to form a calender) and of a second pair of "nip-rolls" (rolls arranged to form a calender) between which the single printed products of a plurality of printed products fed in a row along an advancing direction are made to advance. The first and second pair of "nip-rolls" are cyclically actuated at the same speed and at different speeds to make each product rotate by a predetermined angle comprised between 0-180°. Many units, each comprising a first pair and a second pair of "nip-rolls", can be provided to act individually on a respective row of printed products advancing parallel to one another.

The purpose of the present invention is to avoid the drawbacks of the prior art.

In such a general purpose, the purpose of the present invention is to propose an apparatus and a method for controlling and modifying the orientation of products in book format conveyed in a continuous conveying flow, which make it possible to control and, if necessary, modify the arrangement of the products - and, in particular, their orientation with respect to the conveying direction and sense - in a simple, fast and safe manner during their conveyance, without requiring the intervention of skilled operators and without requiring slowing down or stopping of the conveying flow.

A further purpose of the present invention is to propose an apparatus and a method for controlling and modifying the orientation of products in book format conveyed in a continuous conveying flow, which can easily be applied and implemented in packaging machines or lines, in particular inserters, already existing, ensuring that they operate correctly even at high speeds and increasing their productivity.

Yet another purpose of the present invention is to propose an apparatus and a method for controlling and modifying the orientation of products in book format conveyed in a continuous conveying flow, which are versatile and easily adaptable to different operating requirements of packaging lines and machines.

These purposes according to the present invention are accomplished with an apparatus and a method for controlling and modifying the orientation of products in book format conveyed in a continuous conveying flow as respectively outlined in claim 1 and in claim 15.

These purposes according to the present invention are also accomplished with a machine and a method for packaging products in book format, in particular a machine and a method for inserting inserts in products in book format, as respectively outlined in claim 11 and in claim 23.

Further characteristics are provided in the dependent claims.

The characteristics and advantages of an apparatus and method for controlling and modifying the orientation of products in book format conveyed in a continuous conveying flow and of a machine and method for packaging products in book format respectively comprising said apparatus and said method for controlling and modifying the orientation thereof according to the present invention will become clearer from the following description, given as a non-limiting example, referring to the attached schematic drawings, in which:
figure 1 is a schematic and axonometric view of a continuous conveying flow of a succession of products in book format differently oriented with respect to the advancing sense along the conveying direction;

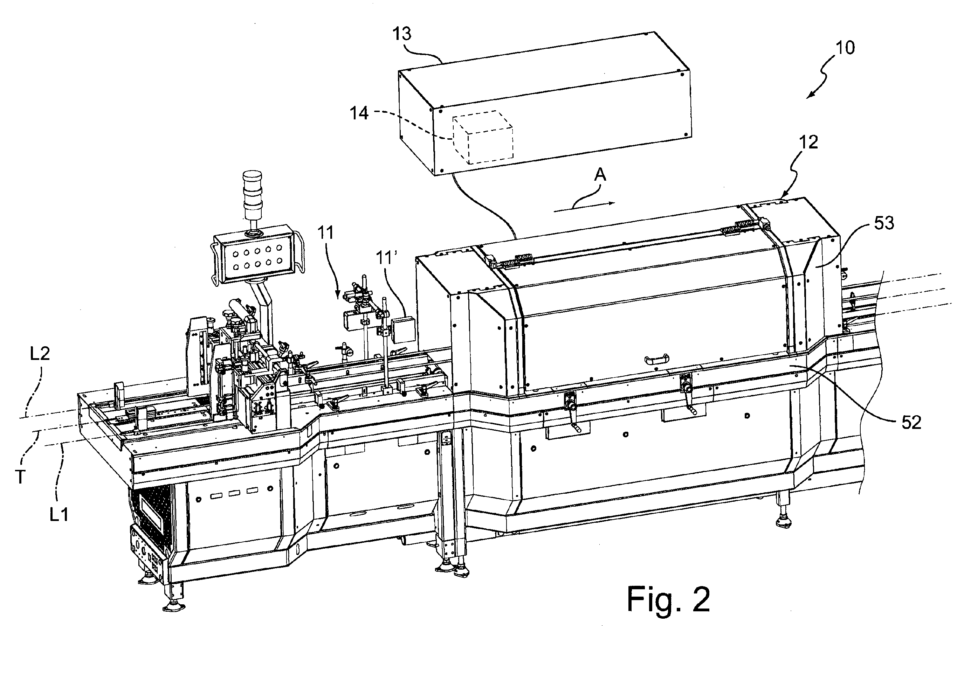

figure 2 is a schematic and axonometric view of an apparatus for controlling and modifying the orientation of products in book format according to the present invention;

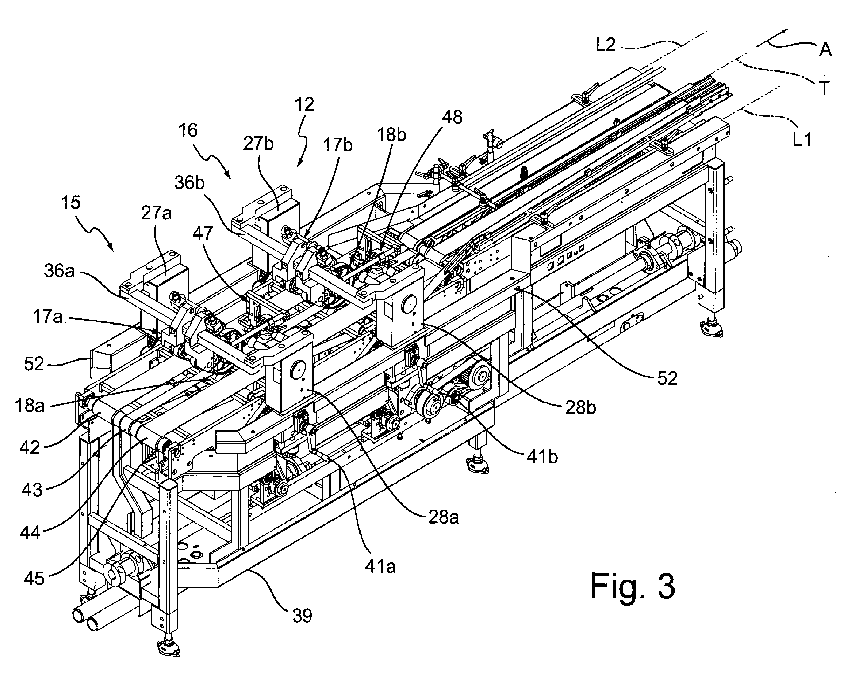

figure 3 is a schematic and axonometric view of a portion of the apparatus of figure 2 without the covers or protective carter;

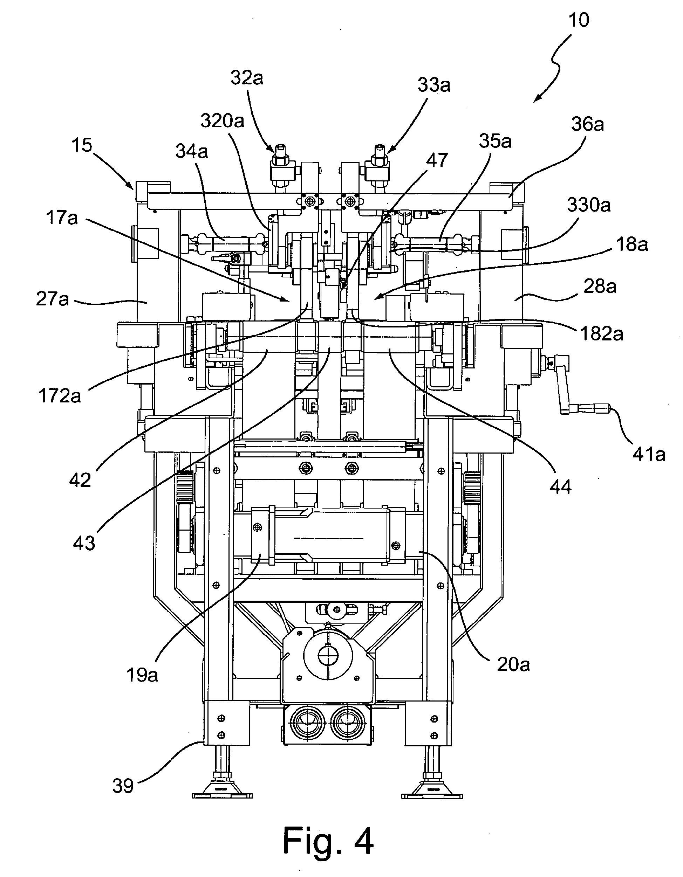

figure 4 is a schematic front view of the portion of apparatus of figure 3;

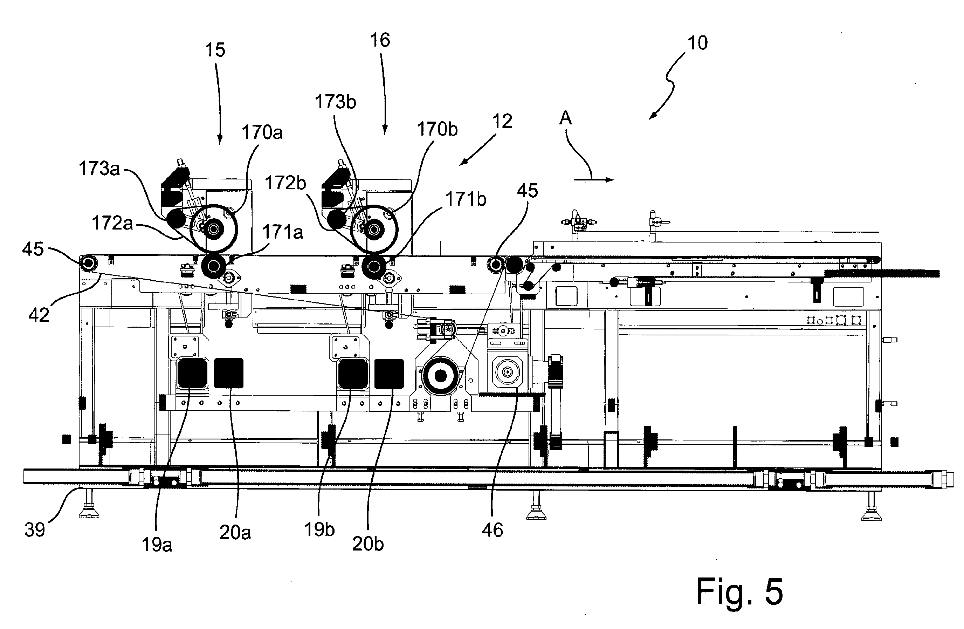

figure 5 is a schematic longitudinal section view of the portion of apparatus of figure 3;
figure 6 is a schematic and axonometric view of a portion of the operating assembly of the apparatus according to the present invention;
figure 7 is a schematic side elevation view of figure 6;
figure 8 is a schematic front view of figure 6;
figure 9 is a schematic section according to the plane IX-IX of figure 7;
figure 10 is a schematic plan view from above of figure 6;
figure 11 shows an operating scheme of the operating assembly of the apparatus according to the present invention;
figure 12 is a schematic and axonometric view of a packaging machine or line comprising an apparatus for controlling and modifying the orientation of the products in book format according to the present invention;
figure 13 is a plan view from above of figure 12.

With reference to the attached figures, an apparatus for controlling and modifying the orientation of products P in book format conveyed in a continuous conveying flow one after another and at a distance from one another in an advancing sense along a conveying direction has been wholly indicated with 10.

In the attached figures, the advancing sense is schematically indicated by the arrow A and the conveying direction is schematically indicated by the dashed line T.

Moreover, the dashed lines L1 and L2 schematically indicate the opposite sides of the continuous conveying flow and parallel to the conveying direction T.

The continuous conveying flow of the products P defines a conveying plane that, generally, is parallel to the horizontal plane.

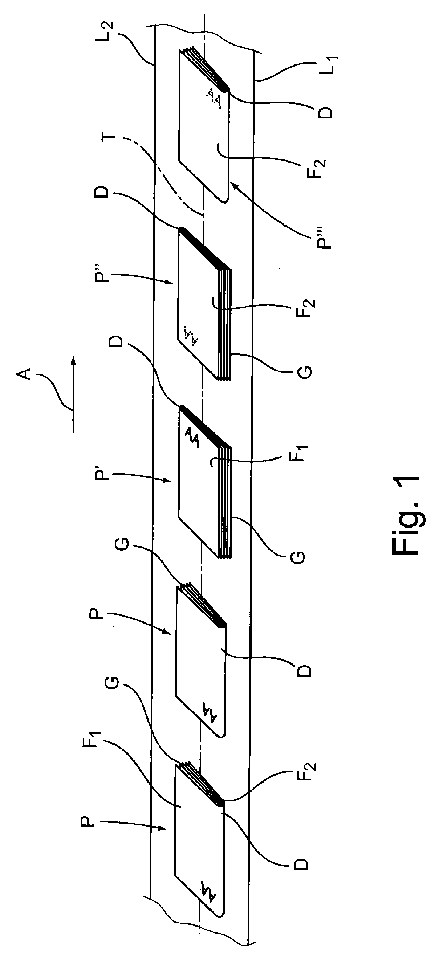

As schematically illustrated in figure 1, each product P comprises a fascicle of printed sheets or pages on top of one another.

Such a fascicle has a front face F1, a rear face F2, a side closed by a spine or back D and the opposite open side G.

Generally, the front face F1 and the rear face F2 are respectively defined by the first and fourth face of a cover sheet.

The products P are conveyed along the conveying direction T in the advancing sense A with the back D and the opposite side G parallel to the advancing direction T.

In order to carry out some packaging operations, in particular inserting one or more inserts of the flyer type inside each product P, it is necessary for the products P to be in a desired orientation with respect to the advancing sense A along the conveying direction T.

In particular, it is necessary for the products P to have the back D facing towards a predetermined side L1 of the conveying flow and the opposite side G facing towards the other side L2 of the conveying flow and along which the packaging (insertion) operation is carried out.

If a product P' or P " has a different orientation from the one desired, having its back D facing towards the side L2 of the conveying flow, it becomes necessary to modify its orientation.

It should be noted that the products P' and P " that have their back D facing towards the side L2 of the conveying flow can also have their front face F1 facing upwards (P') or facing downwards (P").

Equally, it should be noted that the products P and P"' that have their back D facing towards the side L1 of the conveying flow can also have their front face F1 facing upwards (P) or facing downwards (P"').

If, in order to carry out some packaging operations, in particular, inserting one or more inserts of the flyer type inside each product P, it is necessary for the products P to have their front face F1 facing upwards, it becomes necessary to discard the products P" and P"' that, on the other hand, have their rear face F2 facing upwards.

The apparatus 10 according to the present invention makes it possible to control and possibly modify the orientation of the products P, P', P" and P"' with respect to the advancing sense A along the conveying direction T and, if required, to discard the products P " and P"' in a continuous manner during their conveyance.

The apparatus 10 comprises:
- detection means 11 for detecting data identifying the orientation of each product P with respect to the advancing sense A along the conveying direction T,
- an operating assembly 12 arranged for modifying the orientation of each product P individually with respect to the advancing sense A along the conveying direction T during their conveyance in continuous flow,
- a control unit 13 for controlling the operating assembly 12 according to the data identifying the orientation of each product P detected by the detection means 11.

The detection means 11 can consist of acquisition means for acquiring an image of each product P, in particular the image of the face of each product P facing upwards, for example of the video camera type and they are, advantageously, connected to a visualisation device, of the monitor or display type 11'.

However, this does not rule out alternative embodiments of the detection means 11 that, for example, could detect a code or other identifying mark placed on each product, for example on one or both of the front and rear faces F1 and F2 or on the back D.

The unit 13 comprises, or is in any case connected to or in communication with, memory means 14 in which the data identifying a series of reference orientations of the products P are stored and that comprises, in particular, at least one desired orientation with respect to the advancing sense A along the conveying direction T.

If the data identifying the orientation of the products P consists of an image of their face facing upwards with respect to the conveying flow, in the memory means 14 a series of images is stored comprising at least the image of the front face F1 corresponding to the orientation of the product P with the back D facing towards the side L2 of the conveying flow and, furthermore, the image of the front face F1 corresponding to the opposite orientation of the product P, i.e. with the back D facing towards the side L1 of the conveying flow, and the images of the rear face F2 of the product P corresponding to the orientation of the product P with the back D facing towards the side L2 or L1 of the conveying flow.

The operating assembly 12 comprises at least first manipulating means 15 configured to rotate each product P individually during its conveying by a first rotation angle α on a plane parallel to the conveying flow and, in general, coinciding with a horizontal plane.

The operating assembly 12 also comprises second manipulating means 16 that are arranged downstream, with respect to the advancing sense A, of the first manipulating means 15 and that are configured to rotate each product P individually during its conveying by a second rotation angle β on a plane parallel to the conveying flow and, in general, coinciding with a horizontal plane in the same sense as the rotation produced by said first manipulating means 15.

The first angle α and the second angle β each have an amplitude of about 90°, disregarding negligible misalignments, so that the operating assembly 12 is capable of rotating each product P by 180° overall on a plane parallel to the conveying flow, i.e. to the conveying plane.

Each of the first manipulating means 15 and of the second manipulating means 16 comprises a pair of conveying devices of the products P along the conveying direction T and respectively indicated with 17a and 18a, when referred to the first manipulating means 15, and with 17b and 18b, when referred to the second manipulating means 16.

The conveying devices 17a,18a and 17b,18b of each pair are arranged at opposite sides of the conveying flow to convey, both and simultaneously, a single product P. Each of the conveying devices 17a,18a and 17b,18b of each pair is associated with respective motor means 19a,20a and 19b,20b that are controlled by the unit 13 at the same or different speeds, in magnitude and/or in sense, respectively to advance each single product P in the advancing sense A along the conveying direction T keeping its orientation unaltered or making it rotate by the first or second angle α and β, respectively.

The conveying devices 17a,18a and 17b,18b of each pair are also arranged symmetrically with respect to the longitudinal axis of the conveying flow (in the attached figures indicated by the same line T), so as to keep the products P centred.

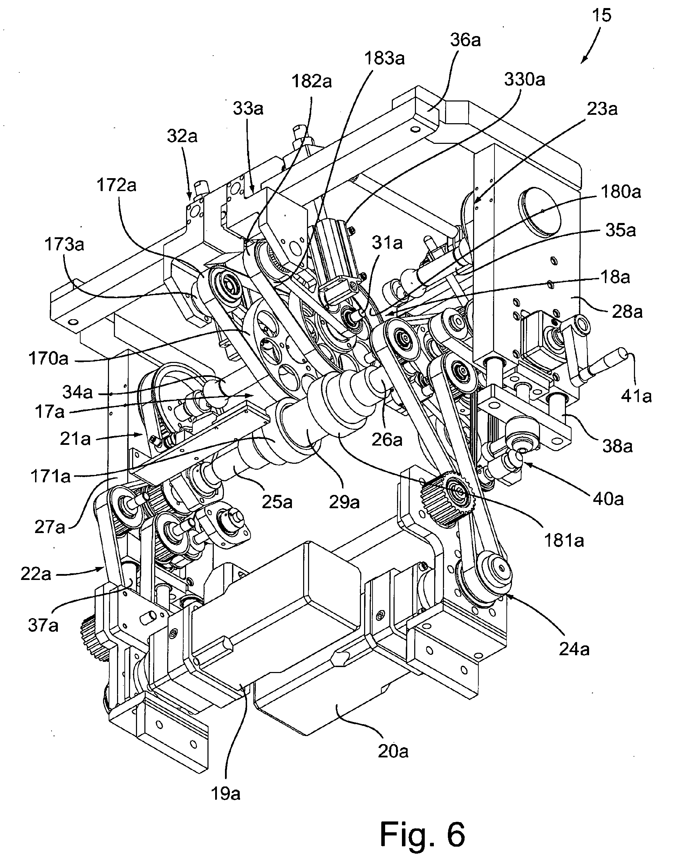

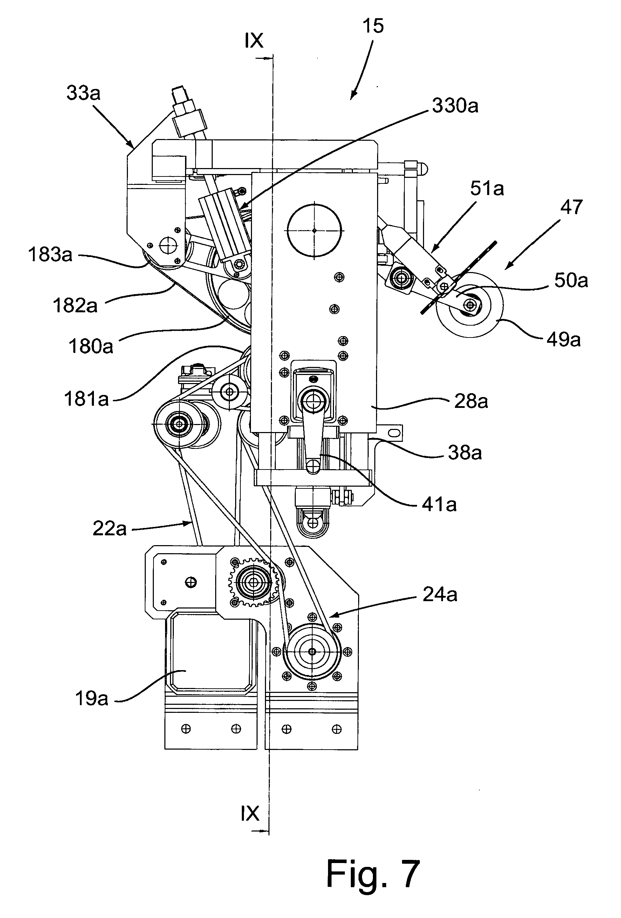

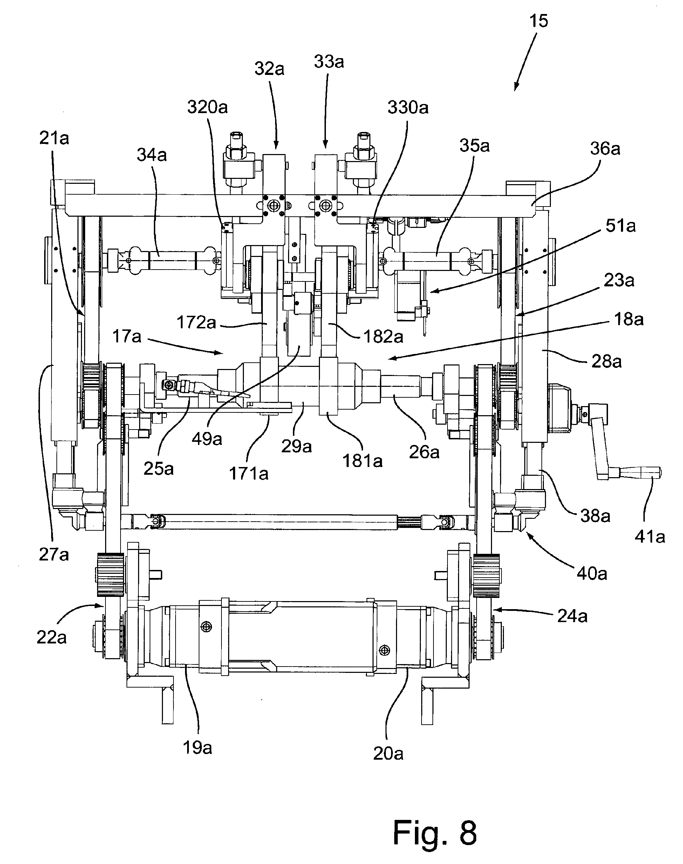

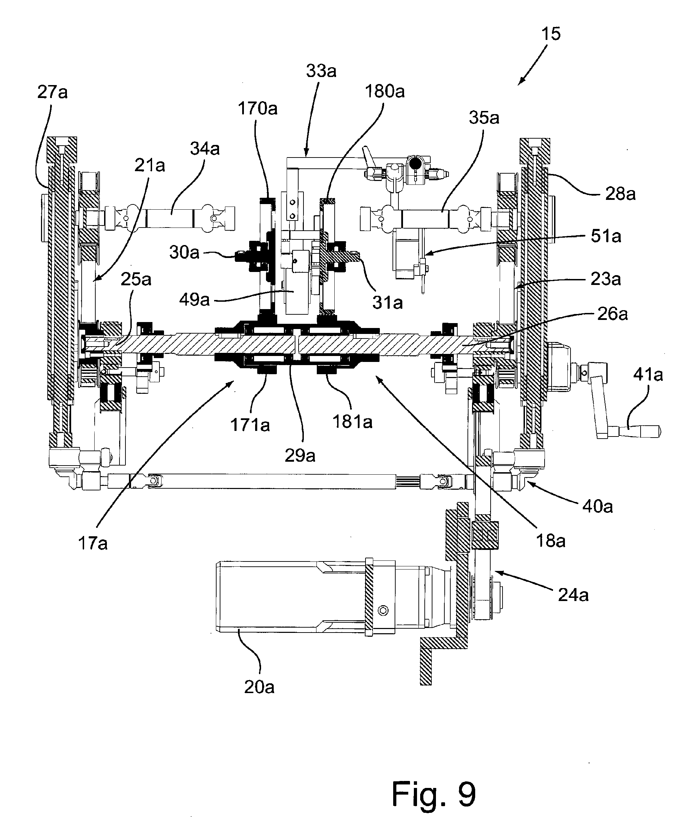

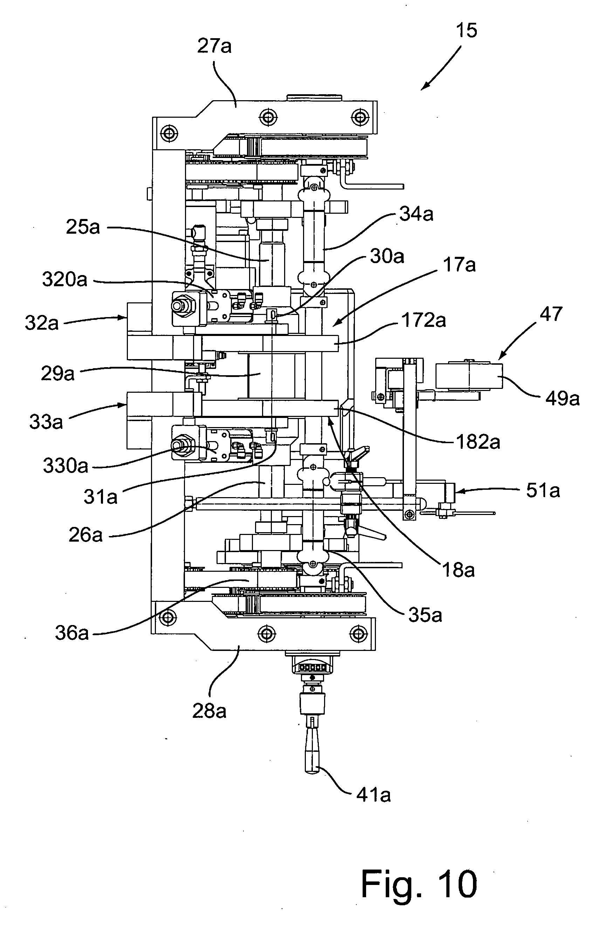

With reference to figures 6 to 10 the first manipulating means 15 will now be illustrated in greater detail, the second manipulating means 16 having the same structure. It should also be specified that in the remaining figures, where represented, the components of the second manipulating means 16 corresponding to those illustrated and described in detail with reference to figures 6 to 10, are identified by the same reference numeral indexed with the letter "b" instead of with the letter "a".

Each of the two conveying devices 17a,18a of the first manipulating means 15 comprises a pair of counter-rotating rollers 170a,171a and 180a,181b respectively, which are rotatably supported about a respective rotation axis transversal, in particular orthogonal, to the conveying direction T and that are arranged one on top of the other to form a calender-like passage of the flow of products P.

The rollers 170a,171a and 180a,181b are actuated, each one independently from the others, by the respective motor means 19a and 20a by means of respective transmission means 21a, 22a, 23a and 24a.

In greater detail, the rollers 171a and 181a are mounted on a respective shaft 25a and 26a so as to rotate as a unit with it, each shaft 25a and 26a has one end supported in a rotary manner by a respective support shoulder 27a and 28a arranged at the opposite sides L2 and L1 of the conveying direction T.

The two shafts 25a and 26a are arranged coaxial to one another with the mutually facing ends separated by a joint 29a.

The two shafts 25a and 26a are set in rotation by the respective motor means 19a and 20a by means of respective transmission means 22a and 24a of the belt type.

The rollers 170a and 180a are mounted on respective shafts 30a and 31a so as to rotate as a unit with it, the shafts 30a and 31a are arranged coaxial to one another and are supported in a rotary manner by the shoulders 27a and 28a by means of a respective support assembly 32a and 33a.

The shafts 30a and 31a are set in rotation by the respective motor means 19a and 20a by means of respective transmission means 21a and 23a of the belt type and corresponding universal joint shafts 34a and 35a.

It should be specified that, for the sake of simplicity, in the attached figures the universal joint shafts 34a and 35a are shown disconnected from the shafts 30a and 31a.

A belt 172a and 182a is partially wound respectively around the roller 170a and 180a and around a corresponding roller 173a and 183a supported idly by the corresponding support assembly 32a and 33a.

The belts 172a and 182a act as guides for the products P into the calender-like passage defined between each pair of counter-rotating rollers 170a,171a and 180a,181a.

Each of the two support assemblies 32a and 33a comprises a pneumatic or hydraulic cylinder 320a and 330a respectively, suitable for modifying the height of the rollers 170a and 180a and for absorbing their vibrations.

The two shoulders 27a and 28a are connected together by a cross member 36a and each of them is slidably mounted along respective rectilinear guides 37a and 38a fixedly connected to a support frame 39 of the operating assembly 12.

The sliding of the two shoulders 27a and 28a along the respective rectilinear guides 37a and 38a is actuated by actuation means 40a controlled by a crank 41a.

The two pairs of counter-rotating rollers 170a,171a and 180a,181a, therefore, can be set in rotation independently from one another and with the same or different speeds, in magnitude and/or in sense, with respect to one another.

The operating assembly 12 also comprises a continuous conveyor with three belts 42, 43 and 44 that are arranged parallel to one another in the conveying direction T and alongside one another at a distance from one another and the central belt 43 of which is centred with respect to the longitudinal axis of the conveying flow and the side belts 42 and 44 are symmetrically arranged at the sides of the central belt 43 a pre-set distance from it.

The rollers of the two pairs of counter-rotating rollers 170a,171a and 180a,181a are arranged in the spaces defined between two successive belts 42, 43 and 43, 44 so that the calender-like passage respectively defined by them is substantially at the same height as the conveying plane defined by the belts 42, 43 and 44. The three belts 42, 43 and 44 of the continuous conveyor are wound around winding rollers 45 one of which is set in rotation by a respective motor 46.

The operating assembly 12 also comprises first and second stabilizing members 47 and 48 for stabilizing the orientation of the products P arranged downstream, with respect to the advancing sense A, respectively of the first manipulating means 15 and of the second manipulating means 16.

Each of the first and second stabilizing members 47 and 48 comprises a respective pressing roller 49a, 49b that is rotatably supported around a respective axis transversal, or better ortogonal, to the conveying direction T at the end of an arm 50a, 50b fixedly connected to the respective cross member 36a, 36b.

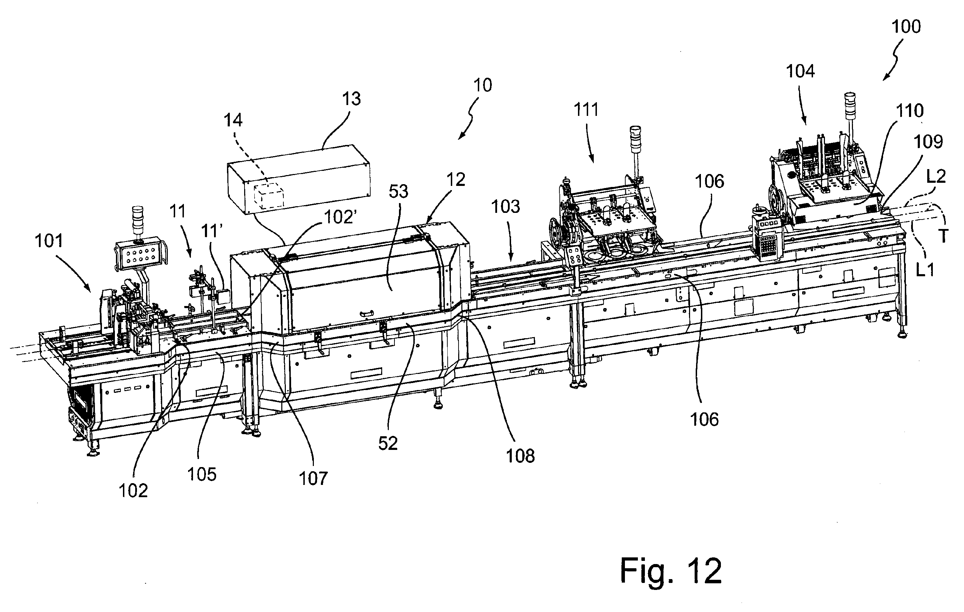

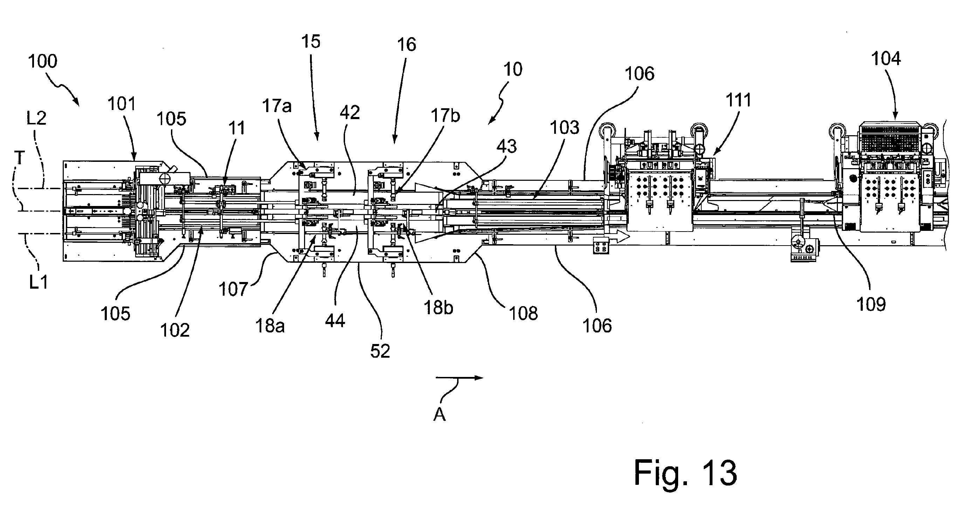

The operating assembly 12 is completed by sensor means 51a and 51b suitable for detecting possible wedging or overlapping of products P, side edges 52 that are spaced apart one from the other so as to allow the rotation operations of the products P and covers or protective carters 53 that are advantageously transparent and that can be opened for inspection. Figures 12 and 13 show a packaging line or machine 100 comprising an apparatus 10 according to the present invention.

The packaging machine 100, in particular, is arranged to insert one or more inserts between the pages of the products P and, in particular, under the page of the products P facing upwards with respect to the conveying flow.

The packaging machine 100 comprising a feed assembly 101 of the products P one after another and at a distance from one another on a first continuous conveyor 102 of the type with thrusters and having an inlet end and an outlet end 102'.

The feed assembly 101 feeds the products P arranged with the back D and the opposite side G parallel to the conveying direction T.

Along the first continuous conveyor 102 the detection means 11 of the apparatus 10 are arranged advantageously connected to a visualisation device 11'. Downstream (with respect to the advancing sense A) of the first continuous conveyor 102 the operating assembly 12 of the apparatus 10 is arranged so as to receive in inlet the continuous flow of products P in outlet from the first continuous conveyor 102. Downstream (with respect to the advancing sense A) of the operating assembly 20 a second continuous conveyor 103 is arranged for removing the products P exiting the apparatus 10 and along which at least one packaging assembly 104 is arranged.

Along the opposite sides of the first and second continuous conveyor 102 and 103 guide edges 105 and 106 are arranged that guide the products P along the conveying direction T and that are joined to the side edges 52 by respective funnel fittings 107 and 108.

The packaging assembly 104, in particular, consists of an inserter of a respective insert between the pages of each product P.

The packaging assembly 104 is arranged along the side L2 of the conveying flow, i.e. of the packaging machine 100 and it comprises means for opening 109 and means for inserting 110 a corresponding insert into the opening thus made.

The means for opening 109, as known, consist of a foil that extends parallel to the conveying direction T along the side L2 at a pre-set height with respect to the conveying plane of the products P and that is configured to lift the page of each product P facing upwards, i.e. opposite the one resting on the conveying plane.

The means for opening 109 and the means for inserting 110, just like any further detail of the packaging assemblies 104 are not described further because they are of the known type.

In the embodiment represented in figures 12 and 13 there is an auxiliary feed assembly 111 of products P, able to be used, for example, if it is necessary to bypass the apparatus 10 or feed products of a different format.

With reference to the attached figures, the operation of an apparatus 10 and of a packaging machine 100 according to the present invention will now be illustrated.

So that the packaging assembly 104 can carry out the respective packaging operation correctly, it is necessary for each product P conveyed along it to have a desired orientation with respect to the advancing sense A.

In particular, if the packaging assembly 104 is an insertion assembly of a respective insert between the pages of the products P it is necessary for the latter to have their back D facing towards the side L1 of the conveying flow and the opposite open side G facing towards the side L2 where the packaging assembly 104 operates.

The detection means 11 acquire the image of the face facing upwards of a current product P.

The image thus acquired is processed by the unit 13 and compared with the series of images corresponding to the reference orientations stored in the memory means 14. Such a series, in particular, comprises four reference images:
- a first image of the front face F1 of the products P being processed oriented with the back D facing towards the side L1,
- a second image of the front face F1 of the products P being processed oriented with the back D facing towards the side L2,
- a third image of the rear face F2 of the products P being processed oriented with the back D facing towards the side L1 and
- a fourth image of the rear face F2 of the products P being processed oriented with the back D facing towards the side L2.

From such a series of reference images one or both of the first and third correspond to the desired orientation of the products P for the correct operation of the packaging assembly 104.

If, on the other hand, there is a need to insert the inserts just under the first cover page of the products P, the first image will be taken as corresponding to the only desired orientation of the products P.

In the case in which the image of the upward-facing face of the current product P corresponds to the first reference image, the unit 13 controls the first and second manipulating means 15 and 16 so that the respective pair of conveying devices 17a, 18a and 17b, 18b work together to convey the current product P the same way and synchronised with the conveying flow defined by the belts 42, 43 and 44 and by the first and second continuous conveyor 102 and 103 respectively arranged upstream and downstream of them.

On the other hand, in the case in which the image of the upward-facing face of the current product P corresponds to the second reference image, the unit 13 controls the first and second manipulating means 15 and 16 so that the respective pair of conveying devices 17a, 18a and 17b, 18b makes the current product P carry out, respectively and in succession one after the other, the first and the second rotation during and at the same time as the advancing of the current product P along the conveying flow.

With reference to the first manipulating means 15, the unit 13 controls the motor means 19a,20a to modify (in magnitude) the rotation speed of the pair of rollers 180a, 181a arranged along the side L1 of the conveying flow with respect to the rotation speed of the pair of rollers 170a, 171a arranged along the side L2 of the conveying flow and both of such rotation speeds with respect to the advancing speed of the products along the conveying flow, so as to generate on the current product P a moment of rotation on a plane parallel to the conveying plane for a time period that is necessary and sufficient for the rotation thereof by the first angle α.

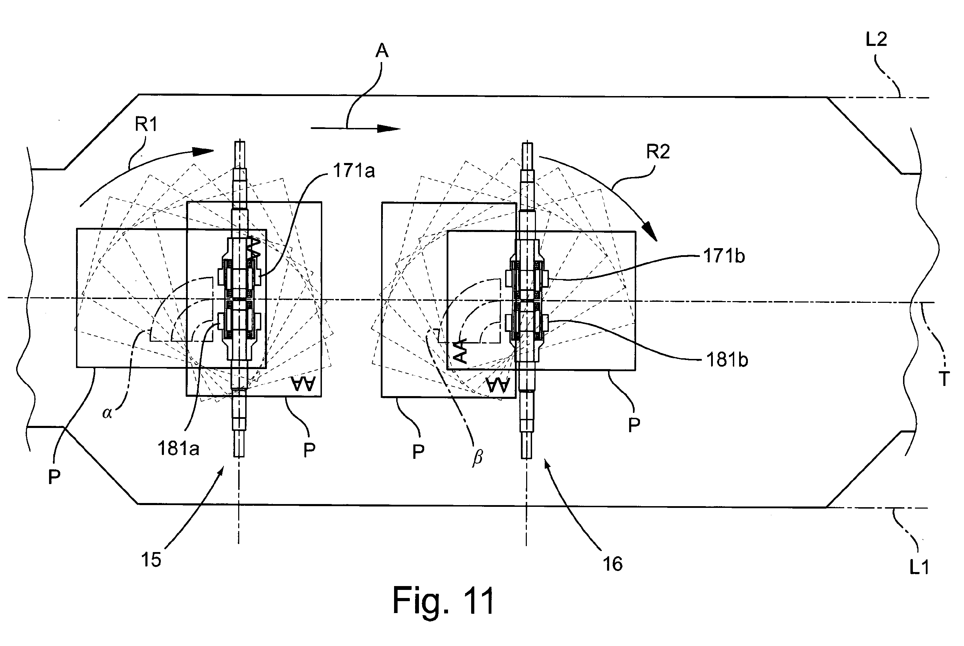

In particular, the unit 13 controls the motor means 19a,20a to reduce the rotation speed of the pair of rollers 180a, 181a arranged along the side L1 of the conveying flow and to increase the rotation speed of the pair of rollers 170a, 171a arranged along the side L2 of the conveying flow with respect to the advancing speed of the products P along the conveying flow so as to generate the first rotation as schematised by the arrow R1 in figure 11.

In the same way, the unit 13 controls the motor means 19b,20b of the second manipulating means 16 to make the current product P, already rotated by 90° with respect to its initial orientation, carry out the second rotation by the second angle β also of 90° as schematically illustrated by the arrow R2 in figure 11. Overall, therefore, the current product P is rotated by the apparatus 10 by 180° on a plane parallel to the conveying flow.

In this way, the apparatus 10 modifies the orientation of the current product P arranging it with the desired orientation (that corresponding to the first reference image) that is necessary for the operation of the packaging assembly 104.

In this specific case with the face F1 facing upwards and the back D facing towards the side L1.

If it is accepted for the products P to be packaged by the packaging assembly 104 also with their rear face F2 facing upwards, the operation described above in relation to the correspondence of the image of the face facing upwards of the current product P respectively with the first and second reference image applies, in an analogous manner, in the case in which it corresponds respectively to the third and fourth reference image.

If, on the other hand, it is not accepted for the products P to be packaged by the packaging assembly 104 also with their rear face F2 facing upwards, in the case in which the image of the face facing upwards of the current product P corresponds respectively to the third and fourth reference image, then the unit 13 controls the first and second manipulating means 15 and 16 so that they work together to convey the current product P the same way and synchronised with the conveying flow defined by the belts 42, 43 and 44 and by the first and second continuous conveyor 102 and 103 arranged respectively upstream and downstream of them and without modifying their orientation.

In this case, moreover, the unit 13 controls the packaging assembly 104 so that it does not operate on the current product P which is subsequently eliminated as a discard.

It should be noted that, thanks to the arrangement and symmetrical configuration with respect to the axis of the conveying flow of the first and second manipulating means 15 and 16, the products P are kept centred along such an axis even when their orientation is modified. Moreover, the first and second stabilizing members 47 and 48 work together to keep the products P centred with respect to the axis of the conveying flow even when they are subject to the successive first and second rotation.

In particular, the first stabilizing members 47 prevent the product P exiting the first manipulating means 15 and that has been rotated by the latter by the first rotation angle α from undergoing, through the effect of inertia or of response times of the various controls, a further rotation before being manipulated by the second manipulating means 16.

In general, the object of the present invention is also a method for controlling and modifying the orientation of the products P in book format conveyed in a continuous conveying flow one after another and at a distance from one another in the advancing sense A along the conveying direction T, comprising the steps of:
- detecting the data identifying the orientation of each product P with respect to the advancing sense A along the conveying direction T with detection means 11,
- processing the data identifying the orientation of each product P detected to compare it with the data identifying a series of reference orientations of the products P with respect to the advancing sense A along the advancing direction T stored in memory means 14 with a control unit 13 in communication with such memory means 14, in which such a series comprises at least one desired reference orientation of the products P,
- if the data identifying the orientation of the current product P detected differs from the data identifying such an at least one desired reference orientation, generating with the control unit 13 a control signal in inlet to an operating assembly 12 arranged for modifying the orientation of each product P to modify the orientation of the current product P or a signal for the subsequent rejection of the current product P,
- in which such steps take place in real time during continuous conveyance of the products P in the conveying flow.

The step of modifying the orientation of the current product P comprises the step of:
- making the current product P carry out a first rotation by a first angle α on a plane parallel to the conveying flow, and possibly the subsequent step of:
- making the current product P carry out a second rotation, subsequent to and in the same sense as the first rotation, by a second angle β on a plane parallel to the conveying flow.

In a preferred embodiment, the first angle α and the second angle β each have an amplitude of 90°.

According to the method for controlling and modifying the orientation of the products P object of the present invention, each of the two steps quoted above for generating the first and second rotation of the product P consists of differentiating, in magnitude and/or in sense, the advancing speed along the conveying direction T at at least two portions of the product P arranged in the proximity of the opposite sides L1 and L2 of the conveying flow, so as to generate a rotation torque or moment acting on the product P to make it rotate on a plane parallel to the conveying flow.

In a preferred embodiment, such two portions are arranged symmetrically with respect to the longitudinal axis of the conveying flow.

Advantageously, the product P is stabilized in the orientation taken up by it after the first and the second rotation so as to keep it centred along the longitudinal axis of the conveying flow.

In a preferred embodiment, the step of detecting the data identifying the orientation of each product P with respect to the advancing sense A along the conveying direction T comprises acquiring at least one image of each product P, in particular, the image of the face thereof facing upwards with respect to the conveying flow.

In this case, the data identifying the series of reference orientations comprise corresponding images of the products P in the respective reference orientations at least one of which corresponds to a desired reference orientation and, possibly, at least one corresponds to an undesired reference orientation.

Such a series, in particular, comprises four reference images:
- a first image of the front face F1 of the products P being processed oriented with the back D facing towards the side L1,
- a second image of the front face F1 of the products P being processed oriented with the back D facing towards the side L2,
- a third image of the rear face F2 of the products P being processed oriented with the back D facing towards the side L1 and
- a fourth image of the rear face F2 of the products P being processed oriented with the back D facing towards the side L2.

From such a series of reference images one or both of the first and possibly the third correspond to the desired orientation of the products P, whereas, in some cases, the third and the fourth can correspond to undesired reference orientations and in which case the product P is discarded.

In general terms, the object of the present invention is also a method for packaging products P in book format, comprising the steps of:
- feeding the products P one after another and at a distance from one another in a conveying flow,
- controlling and modifying the orientation of the products P with a method for controlling and modifying the orientation thereof and as described above,
- removing the products in book format thus controlled and oriented towards a packaging station, in which at least one packaging operation is carried out.

In a preferred embodiment, the packaging operation consists of forming an opening in the fascicle constituting the product P and inserting at least one insert in it.

The apparatus and the method for controlling and modifying the orientation of products in book format conveyed in a continuous conveying flow according to the present invention make it possible to control and, if necessary, modify the arrangement of the products - and, in particular, their orientation with respect to conveying direction and sense - in a simple, fast and safe manner during their conveyance, in a totally automated manner, without requiring the intervention of skilled operators and without requiring slowing down or stopping of the conveying flow.

The apparatus and the method for controlling and modifying the orientation of products in book format conveyed in a continuous conveying flow can be easily applied or implemented in packaging lines or machines, in particular inserting machines, already existing, ensuring their correct operation even at high speeds and increasing their productivity.

The apparatus and the method for controlling and modifying the orientation of products in book format conveyed in a continuous conveying flow according to the present invention are extremely versatile and easily adaptable to different operating requirements of packaging lines and machines.

The apparatus and the method for controlling and modifying the orientation of products in book format conveyed in a continuous conveying flow, as well as the packaging machine and method in which they are applied and implemented thus conceived can undergo numerous modifications and variants, all of which are covered by the invention; moreover, all of the details can be replaced with technically equivalent elements. In practice, the materials used, as well as the sizes, can be whatever according to the technical requirements.

For example, the rollers of the pairs of conveying devices of the first and second manipulating means can be replaced by cylinders, wheels or similar; the means for transmitting the motion from the motor means to such conveying devices can be different from the belt ones illustrated and described; the continuous conveyor of the operating assembly can be made in a different way.

## Claims

1. An apparatus (10) for controlling and modifying the orientation of products (P) in book format conveyed in a continuous conveying flow one after another and at a distance from one another in an advancing sense (A) along a conveying direction (T), comprising:
- detection means (11) for detecting data identifying the orientation of each of said products (P) in book format with respect to said advancing sense (A) along said conveying direction (T),
- an operating assembly (12) arranged for modifying the orientation of each of said products (P) in book format individually with respect to said advancing sense (A) along said conveying direction (T) during their conveyance in said continuous flow, and
- a control unit (13) for controlling said operating assembly (12) according to the data identifying the orientation of each of said products (P) in book format detected by said detection means (11), said apparatus (10) being **characterized in that** said operating assembly (12) comprises at least first manipulating means (15) configured so as to rotate each of said products (P) in book format individually during the conveyance in said continuous conveying flow by a first rotation angle (α) on a plane parallel to said conveying flow and second manipulating means (16), which are set downstream, with respect to said advancing sense (A), of said first manipulating means (15) and which are configured so as to rotate each of said products (P) in book format individually during the conveyance in said continuous conveying flow by a second rotation angle (β) on a plane parallel to said conveying flow in the same sense as the rotation produced by said first manipulating means (15), wherein each one of said first angle (α) and of said second angle (β) has an amplitude of 90°.

2. The apparatus (10) according to claim 1, **characterized in that** each of said first manipulating means (15) and of said second manipulating means (16) comprises a pair of conveying devices (17a, 18a; 17b, 18b) for conveying said products (P) in book format along said conveying direction (T), said conveying devices (17a, 18a; 17b, 18b) being arranged on the opposite sides (L2, L1) of said conveying flow for conveying, both and simultaneously, a single product (P) in book format, wherein each of the conveying devices (17a, 18a; 17b, 18b) of each said pair is associated with respective motor means (19a, 20a; 19b, 20b) that are controlled by said control unit (13) at the same speeds or at speeds that are different, in magnitude and/or in sense, respectively for making said single product (P) in book format advance in said advancing sense (A) along said conveying direction (T) keeping the orientation thereof unaltered or making it rotate respectively by said first or second angle (α; β).

3. The apparatus (10) according to claim 2, **characterized in that** said conveying devices (17a, 18a; 17b, 18b) of each said pair are arranged symmetrically with respect to the longitudinal axis of said conveying flow.

4. The apparatus (10) according to claim 2 or 3, **characterized in that** each of said conveying devices (17a, 18a; 17b, 18b) of each said pair comprises a pair of counter-rotating rollers (170a, 171a; 180a, 181a; 170b, 171b; 180b, 181b), which are supported in a rotating manner about a respective rotation axis transverse to said conveying direction (T) and which are arranged one on top of the other to form a calender-like passage for said conveying flow.

5. The apparatus (10) according to one or more of the claims 2 to 4, **characterized in that** it comprises a continuous conveyor with three belts (42, 43, 44) that are arranged parallel to one another and alongside one another at a distance from one another, wherein in the space defined between two successive belts (42, 43; 43, 44) a respective conveying device (17a, 18a; 17b, 18b) of each said pair is placed.

6. The apparatus (10) according to one or more of the preceding claims, **characterized in that** said operating assembly (12) comprises first stabilizing members (47) for stabilizing the orientation of each of said products (P) in book format, said first stabilizing members (47) being arranged downstream, with respect to said advancing sense (A), of said first manipulating means (15).

7. The apparatus (10) according to one or more of the preceding claims, **characterized in that** said operating assembly (12) comprises second stabilizing members (48) for stabilizing the orientation of each of said products (P) in book format, said second stabilizing members (48) being arranged downstream, with respect to said advancing sense (A), of said second manipulating means (16).

8. The apparatus (10) according to one or more of the preceding claims, **characterized in that** said detection means (11) comprise acquisition means for acquiring at least one image of each of said products (P) in book format.

9. The apparatus (10) according to one or more of the preceding claims, **characterized in that** it comprises memory means (14) for storing the data identifying one or more reference orientations of said products (P) in book format with respect to said advancing sense (A) along said conveying direction (T), said memory means (14) being associated with said control unit (13).

10. The apparatus (10) according to one or more of the preceding claims, **characterized in that** each of said products (P) in book format comprises a fascicle of sheets, which has a front face (F1), a rear face (F2), a back (D) and the side (G) opposite to said back which is open, each of said products (P) in book format being arranged with said back (D) and said opposite side (G) parallel to said conveying flow.

11. An inserting and/or packaging machine (100) for products in (P) book format, comprising a feed assembly (101) for feeding said products (P) in book format one after another and at a distance from one another on a first continuous conveyor (102) having an inlet end and an outlet end (102'), an apparatus (10) according to one or more preceding claims for controlling and modifying the orientation of the products in book format of the continuous conveying flow exiting from said first conveyor (102), and a second continuous conveyor (103) for removing the products (P) exiting from said apparatus (10) and along which at least one packaging and/or inserting assembly (104) is arranged.

12. The inserting and/or packaging machine (100) according to claim 11, **characterized in that** said products (P) in book format each comprises a fascicle of sheets that has a front face (F1), a rear face (F2), a back (D) and the side (G) opposite to said back which is open and are fed by said feed assembly (101) with said back (D) and said opposite side (G) parallel to the conveying direction (T) defined by said first conveyor (102), wherein said packaging assembly (104) is arranged on one side (L2) of said second conveyor (103) and said apparatus (10) for orienting said products in book format is prearranged for orienting said products (P) in book format with the respective back (D) oriented along the side (L1) of said second continuous conveyor (103) opposite to that (L2) along which said packaging and/or inserting assembly (104) is arranged.

13. The inserting and/or packaging machine (100) according to claim 12, **characterized in that** said packaging and/or inserting assembly (104) comprises means for opening (109) said fascicle and means for inserting (110) at least one insert into said opening.

14. The inserting and/or packaging machine (100) according to one or more of claims 11 to 13, **characterized in that** said control unit (13) controls said at least one packaging and/or inserting assembly (104) according to the data identifying the orientation of each of said products (P) in book format detected by said detection means.

15. A method for controlling and modifying the orientation of products (P) in book format conveyed in a continuous conveying flow one after another and at a distance from one another in an advancing sense (A) along a conveying direction (T), comprising the steps of:
- detecting the data identifying the orientation of each of said products (P) in book format with respect to said advancing sense (A) along said conveying direction (T) with detection means (11),
- processing the detected data identifying the orientation of each of said products (P) in book format to compare them with the data identifying a series of reference orientations of said products (P) in book format with respect to said advancing sense (A) along said conveying direction (T) and stored in memory means (14) with a control unit (13) in communication with said memory means (14), wherein said series comprises at least one desired reference orientation of said products in book format,
- if the detected data identifying the orientation of the current product (P) in book format differ from the data identifying said at least one desired reference orientation, generating with said control unit (13) a control signal in input to an operating assembly (12) that is prearranged for modifying the orientation of each of said products (P) in book format respectively for modifying the orientation of the current product (P) in book format or a signal for the subsequent rejection of said current product (P) in book format,
- wherein said steps occur in real time during continuous conveyance of said products (P) in book format in said conveying flow, wherein said step of modifying the orientation of said product (P) in book format comprises the steps of:
- making said product (P) in book format perform a first rotation by a first angle (α) on a plane parallel to said conveying flow and
- making said product (P) in book format perform a second rotation, subsequent to and in the same sense as said first rotation, by a second angle (β) on a plane parallel to said conveying flow, wherein
each one of said first angle (α) and of said second angle (β) has an amplitude of 90°.

16. The method according to claim 15, **characterized in that** each of said steps consists in differentiating, in magnitude and/or sense, the advancing speed along said conveying direction (T) at at least two portions of said product (P) in book format , said at least two portions being arranged in the proximity of the opposite sides (L1, L2) of said conveying flow.

17. The method according to claim 16, **characterized in that** said two portions are arranged symmetrically with respect to the longitudinal axis of said conveying flow.

18. The method according to one or more of claims 15 to 17, **characterized in that** it further comprises stabilizing the orientation of each of said products (P) in book format after said first rotation.

19. The method according to one or more of claims 15 to 18, **characterized in that** it further comprises stabilizing the orientation of each of said products (P) in book format after said second rotation.

20. The method according to one or more of claims 15 to 19, **characterized in that** said detection comprises acquiring at least one image of each of said products (P) in book format, wherein the data identifying said series of reference orientations comprise corresponding images of said products in book format in said respective reference orientations.

21. The method according to one or more of claims 15 to 20, **characterized in that** said series of reference orientations further comprises one or more undesired reference orientations.

22. The method according to claim 21, **characterized in that** said products (P) in book format each comprises a fascicle of sheets that has a front face (F1), a rear face (F2), a back (D) and the side (G) opposite to said back which is open and are arranged with said back (D) and said opposite side (G) parallel to said conveying direction (T) and wherein in said at least one desired orientation said back (D) is arranged along a pre-set side (L1) of said conveying flow.

23. A method for packaging products (P) in book format and/or inserting inserts in said products (P) in book format, comprising the steps of:
- feeding said products (P) in book format one after another and at a distance from one another in a conveying flow,
- controlling and modifying the orientation of said products (P) in book format with a method for controlling and modifying the orientation of said products in book format according to one or more of claims 15 to 22, and
- removing the products (P) in book format thus controlled and oriented towards a packaging station, wherein at least one packaging operation is performed.

24. The packaging and/or inserting method according to claim 23, wherein said products (P) in book format each comprises a fascicle of sheets that has a front face (F1), a rear face (F2), a back (D) and the side (G) opposite to said back which is open and are fed with said back (D) and said opposite side (G) parallel to the conveying direction (T) of said conveying flow, and wherein the orientation of said products (P) in book format is controlled and modified so that said products (P) in book format be arranged with the respective back (D) oriented along a pre-set side (L1) of said conveying flow, on the opposite side (L2) of which said packaging station operates.

25. The packaging and/or inserting method according to claim 24, **characterized in that** said operation consists in forming an opening in said fascicle and inserting at least one insert in said opening.

## Patentansprüche

1. Vorrichtung (10) zum Prüfen und Ändern der Ausrichtung von Produkten (P) in Buchformat, die in einem kontinuierlichen Förderfluss nacheinander und mit einem Abstand voneinander in einer Vorschubrichtung (A) entlang einer Förderrichtung (T) gefördert werden, umfassend:
- eine Erfassungseinrichtung (11) zum Erfassen von Daten, welche die Ausrichtung von jedem dieser Produkte (P) in Buchformat zur Vorschubrichtung (A) entlang der Förderrichtung (T) kennzeichnen,
- eine Betriebsbaugruppe (12), die dazu eingerichtet ist, die Ausrichtung von jedem der Produkte (P) in Buchformat zur Vorschubrichtung (A) entlang der Förderrichtung (T) individuell zu ändern, während sie in dem kontinuierlichen Förderfluss gefördert werden, und
- eine Steuereinheit (13) zum Steuern der Betriebsbaugruppe (12) in Übereinstimmung mit den die Ausrichtung von jedem der Produkte (P) in Buchformat kennzeichnenden Daten, die von der Erfassungseinrichtung (11) erfasst werden, wobei diese Vorrichtung (10) **dadurch gekennzeichnet ist, dass** die Betriebsbaugruppe (12) mindestens eine erste Handhabungseinrichtung (15), die gestaltet ist, um jedes der Produkte (P) in Buchformat während der Förderung in dem kontinuierlichen Förderfluss einzeln um einen ersten Drehwinkel (α) in einer zum Förderfluss parallelen Ebene zu drehen, und eine zweite Handhabungseinrichtung (16) umfasst, die, bezogen auf die Vorschubrichtung (A), stromabwärts der ersten Handhabungseinrichtung (15) angeordnet und gestaltet ist, um jedes der Produkte (P) in Buchformat während der Förderung in dem kontinuierlichen Förderfluss einzeln um einen zweiten Drehwinkel (β) in einer zum Förderfluss parallelen Ebene in derselben Richtung wie die von der ersten Handhabungseinrichtung (15) erzeugte Drehung zu drehen, wobei jeder von diesem ersten Winkel (α) und diesem zweiten Winkel (β) eine Weite von 90° hat.

2. Vorrichtung (10) nach Anspruch 1, **dadurch gekennzeichnet, dass** jede von der ersten Handhabungseinrichtung (15) und der zweiten Handhabungseinrichtung (16) ein Paar von Fördervorrichtungen (17a, 18a; 17b, 18b) zum Fördern der Produkte (P) in Buchformat entlang der Förderrichtung (T) umfasst, wobei diese Fördervorrichtungen (17a, 18a; 17b, 18b) auf den entgegengesetzten Seiten (L2, L1) des Förderflusses angeordnet sind, um beide und simultan ein einzelnes Produkt (P) in Buchformat zu fördern, wobei jede der Fördervorrichtungen (17a, 18a; 17b, 18b) von jedem Paar mit jeweiligen Motormitteln (19a, 20a; 19b, 20b) verbunden ist, die jeweils von der Steuereinheit (13) mit den gleichen Geschwindigkeiten oder mit Geschwindigkeiten, die in Bezug auf Größenordnung und/oder Richtung verschieden sind, gesteuert werden, um das einzelne Produkt (P) in Buchformat in der Vorschubrichtung (A) entlang der Förderrichtung (T) vorrücken zu lassen und dabei dessen Ausrichtung unverändert zu lassen oder es jeweils um den ersten oder zweiten Winkel (α; β) zu drehen.

3. Vorrichtung (10) nach Anspruch 2, **dadurch gekennzeichnet, dass** die Fördervorrichtungen (17a, 18a; 17b, 18b) von jedem Paar symmetrisch zur Längsachse des Förderflusses angeordnet sind.

4. Vorrichtung (10) nach Anspruch 2 oder 3, **dadurch gekennzeichnet, dass** jede der Fördervorrichtungen (17a, 18a; 17b, 18b) von jedem Paar ein Paar von gegenläufig drehenden Walzen (170a, 171a; 180a, 181a; 170b, 171b; 180b, 181b) umfasst, die um eine jeweilige quer zur Förderrichtung (T) liegende Drehachse drehend gelagert sind und die übereinander angeordnet sind, um eine kalanderartige Durchführung für den Förderfluss zu bilden.

5. Vorrichtung (10) nach einem oder mehreren der Ansprüche 2 bis 4, **dadurch gekennzeichnet, dass** sie einen Stetigförderer mit drei Gurten (42, 43, 44) umfasst, die parallel zueinander und nebeneinander mit einem Abstand voneinander angeordnet sind, wobei in dem zwischen zwei aufeinanderfolgenden Gurten (42, 43; 43, 44) definierten Raum eine jeweilige Fördervorrichtung (17a, 18a; 17b, 18b) von jedem Paar angeordnet ist.

6. Vorrichtung (10) nach einem oder mehreren der vorhergehenden Ansprüche, **dadurch gekennzeichnet, dass** die Betriebsbaugruppe (12) erste Stabilisierungsglieder (47) zum Stabilisieren der Ausrichtung von jedem der Produkte (P) in Buchformat umfasst, wobei diese ersten Stabilisierungsglieder (47), bezogen auf die Vorschubrichtung (A), stromabwärts der ersten Handhabungseinrichtung (15) angeordnet sind.

7. Vorrichtung (10) nach einem oder mehreren der vorhergehenden Ansprüche, **dadurch gekennzeichnet, dass** die Betriebsbaugruppe (12) zweite Stabilisierungsglieder (48) zum Stabilisieren der Ausrichtung von jedem der Produkte (P) in Buchformat umfasst, wobei diese zweiten Stabilisierungsglieder (48), bezogen auf die Vorschubrichtung (A), stromabwärts der zweiten Handhabungseinrichtung (16) angeordnet sind.

8. Vorrichtung (10) nach einem oder mehreren der vorhergehenden Ansprüche, **dadurch gekennzeichnet, dass** die Erfassungseinrichtung (11) eine Aufnahmeeinrichtung zum Aufnehmen von mindestens einem Bild von jedem der Produkte (P) in Buchformat umfasst.

9. Vorrichtung (10) nach einem oder mehreren der vorhergehenden Ansprüche, **dadurch gekennzeichnet, dass** sie eine Speichereinrichtung (14) zum Speichern der Daten umfasst, die eine oder mehrere Referenzausrichtungen der Produkte (P) in Buchformat zur Vorschubrichtung (A) entlang der Förderrichtung (T) kennzeichnen, wobei diese Speichereinrichtung (14) mit der Steuereinheit (13) verbunden ist.

10. Vorrichtung (10) nach einem oder mehreren der vorhergehenden Ansprüche, **dadurch gekennzeichnet, dass** jedes der Produkte (P) in Buchformat ein Bündel von Blättern umfasst, das eine Vorderseite (F1), eine Rückseite (F2), einen Rücken (D) und die dem Rücken entgegengesetzte Seite (G), die offen ist, aufweist, wobei jedes dieser Produkte (P) in Buchformat mit dem Rücken (D) und der entgegengesetzten Seite (G) parallel zum Förderfluss angeordnet ist.

11. Einlege- und/oder Verpackungsmaschine (100) für Produkte (P) in Buchformat, die eine Zuführbaugruppe (101) zum Zuführen dieser Produkte (P) in Buchformat nacheinander und mit einem Abstand voneinander auf einen ersten Stetigförderer (102) mit einem Einlaufende und einem Auslaufende (102'), eine Vorrichtung (10) nach einem oder mehreren der vorhergehenden Ansprüche zum Prüfen und Ändern der Ausrichtung der Produkte in Buchformat des aus dem ersten Förderer (102) austretenden kontinuierlichen Förderflusses und einen zweiten Stetigförderer (103) zum Entfernen der aus der Vorrichtung (10) austretenden Produkte (P) umfasst und entlang der mindestens eine Verpackungs- und/oder Einlegebaugruppe (104) angeordnet ist.

12. Einlege- und/oder Verpackungsmaschine (100) nach Anspruch 11, **dadurch gekennzeichnet, dass** die Produkte (P) in Buchformat jeweils ein Bündel von Blättern umfassen, das eine Vorderseite (F1), eine Rückseite (F2), einen Rücken (D) und die dem Rücken entgegengesetzte Seite (G), die offen ist, aufweist, und von der Zuführbaugruppe (101) mit dem Rücken (D) und dieser entgegengesetzten Seite (G) parallel zu der vom ersten Förderer (102) definierten Förderrichtung (T) zugeführt werden, wobei die Verpackungsbaugruppe (104) auf einer Seite (L2) des zweiten Förderers (103) angeordnet ist und die Vorrichtung (10) zum Ausrichten der Produkte in Buchformat zum Ausrichten dieser Produkte (P) in Buchformat mit dem jeweiligen längs der Seite (L1) des zweiten Stetigförderers (103) ausgerichteten Rücken (D) bestimmt ist, die der Seite (L2) gegenüberliegt, längs der die Verpackungs- und/oder Einlegebaugruppe (104) angeordnet ist.

13. Einlege- und/oder Verpackungsmaschine (100) nach Anspruch 12, **dadurch gekennzeichnet, dass** die Verpackungs- und/oder Einlegebaugruppe (104) Mittel zum Öffnen (109) des Bündels und Mittel zum Einführen (110) von mindestens einer Beilage in diese Öffnung umfasst.

14. Einlege- und/oder Verpackungsmaschine (100) nach einem oder mehreren der Ansprüche 11 bis 13, **dadurch gekennzeichnet, dass** die Steuereinheit (13) mindestens eine Verpackungs- und/oder Einlegebaugruppe (104) in Übereinstimmung mit den die Ausrichtung von jedem der Produkte (P) in Buchformat kennzeichnenden Daten steuert, die von der Erfassungseinrichtung erfasst werden.

15. Verfahren zum Prüfen und Ändern der Ausrichtung von Produkten (P) in Buchformat, die in einem kontinuierlichen Förderfluss nacheinander und mit einem Abstand voneinander in einer Vorschubrichtung (A) entlang einer Förderrichtung (T) gefördert werden, das die folgenden Schritte umfasst:
- Erfassen der Daten, welche die Ausrichtung von jedem dieser Produkte (P) in Buchformat zur Vorschubrichtung (A) entlang der Förderrichtung (T) kennzeichnen, mit einer Erfassungseinrichtung (11),
- Verarbeiten der erfassten Daten, welche die Ausrichtung von jedem dieser Produkte (P) in Buchformat kennzeichnen, um sie mit den Daten zu vergleichen, die eine Reihe von Referenzausrichtungen dieser Produkte (P) in Buchformat zu dieser Vorschubrichtung (A) entlang der Förderrichtung (T) kennzeichnen, und die in einer Speichereinrichtung (14) gespeichert sind, mit einer Steuereinheit (13), die mit dieser Speichereinrichtung (14) verbunden ist, wobei die Reihe mindestens eine gewünschte Referenzausrichtung dieser Produkte in Buchformat umfasst,
- wenn die erfassten Daten, welche die Ausrichtung des aktuellen Produkts (P) in Buchformat kennzeichnen, von den Daten abweichen, die diese mindestens eine gewünschte Referenzausrichtung kennzeichnen, Erzeugen mit der Steuereinheit (13) eines Steuersignals am Eingang einer Betriebsbaugruppe (12), die zum Ändern der Ausrichtung von jedem dieser Produkte (P) in Buchformat bestimmt ist, um die Ausrichtung des aktuellen Produkts (P) in Buchformat entsprechend zu ändern, oder eines Signals für die darauffolgende Zurückweisung dieses aktuellen Produkts (P) in Buchformat,
- wobei die Schritte in Echtzeit während der kontinuierlichen Förderung dieser Produkte (P) in Buchformat in diesem Förderfluss erfolgen, wobei der Schritt des Änderns der Ausrichtung dieses Produkts (P) in Buchformat die folgenden Schritte umfasst:
- Veranlassen des Produkts (P) in Buchformat zur Ausführung einer ersten Drehung um einen ersten Winkel (α) in einer zum Förderfluss parallelen Ebene, und
- Veranlassen des Produkts (P) in Buchformat zur Ausführung einer zweiten Drehung im Anschluss an und in der gleichen Richtung wie die erste Drehung um einen zweiten Winkel (β) in einer zum Förderfluss parallelen Ebene, wobei
jeder von diesem ersten Winkel (α) und diesem zweiten Winkel (β) eine Weite von 90° hat.

16. Verfahren nach Anspruch 15, **dadurch gekennzeichnet, dass** jeder dieser Schritte im Differenzieren, in Größenordnung und/oder Richtung, der Vorschubgeschwindigkeit entlang der Förderrichtung (T) bei mindestens zwei Abschnitten des Produkts (P) in Buchformat besteht, wobei diese mindestens zwei Abschnitte in der Nähe der entgegengesetzten Seiten (L1, L2) des Förderflusses angeordnet sind.

17. Verfahren nach Anspruch 16, **dadurch gekennzeichnet, dass** die zwei Abschnitte symmetrisch zur Längsachse des Förderflusses angeordnet sind.

18. Verfahren nach einem oder mehreren der Ansprüche 15 bis 17, **dadurch gekennzeichnet, dass** es ferner das Stabilisieren der Ausrichtung von jedem der Produkte (P) in Buchformat nach der ersten Drehung umfasst.

19. Verfahren nach einem oder mehreren der Ansprüche 15 bis 18, **dadurch gekennzeichnet, dass** es ferner das Stabilisieren der Ausrichtung von jedem der Produkte (P) in Buchformat nach der zweiten Drehung umfasst.

20. Verfahren nach einem oder mehreren der Ansprüche 15 bis 19, **dadurch gekennzeichnet, dass** das Erfassen das Aufnehmen von mindestens einem Bild von jedem der Produkte (P) in Buchformat umfasst, wobei die Daten, welche die Reihe von Referenzausrichtungen kennzeichnen, entsprechende Bilder der Produkte in Buchformat in den jeweiligen Referenzausrichtungen umfassen.

21. Verfahren nach einem oder mehreren der Ansprüche 15 bis 20, **dadurch gekennzeichnet, dass** die Reihe von Referenzausrichtungen ferner eine oder mehrere unerwünschte Referenzausrichtungen umfasst.

22. Verfahren nach Anspruch 21, **dadurch gekennzeichnet, dass** die Produkte (P) in Buchformat jeweils ein Bündel von Blättern, das eine Vorderseite (F1), eine Rückseite (F2), einen Rücken (D) und die dem Rücken entgegengesetzte Seite (G), die offen ist, aufweist, umfassen und mit dem Rücken (D) und der entgegengesetzten Seite (G) parallel zur Förderrichtung (T) angeordnet sind, und wobei der Rücken (D) in der mindestens einen gewünschten Ausrichtung entlang einer vorgegebenen Seite (L1) des Förderflusses angeordnet ist.

23. Verfahren zum Verpacken von Produkten (P) in Buchformat und/oder zum Einlegen von Beilagen in diese Produkte (P) in Buchformat, das die folgenden Schritte umfasst:
- Zuführen der Produkte (P) in Buchformat nacheinander und mit einem Abstand voneinander in einem Förderfluss,
- Prüfen und Ändern der Ausrichtung der Produkte (P) in Buchformat mit einem Verfahren zum Prüfen und Ändern der Ausrichtung dieser Produkte in Buchformat nach einem oder mehreren der Ansprüche 15 bis 22, und
- Entfernen der derart geprüften und ausgerichteten Produkte (P) in Buchformat in Richtung einer Verpackungsstation, wobei mindestens ein Verpackungsvorgang ausgeführt wird.

24. Verpackungs- und/oder Einlegeverfahren nach Anspruch 23, wobei die Produkte (P) in Buchformat jeweils ein Bündel von Blättern, das eine Vorderseite (F1), eine Rückseite (F2), einen Rücken (D) und die dem Rücken entgegengesetzte Seite (G), die offen ist, aufweist, umfassen und mit dem Rücken (D) und der entgegengesetzten Seite (G) parallel zur Förderrichtung (T) des Förderflusses zugeführt werden, und wobei die Ausrichtung dieser Produkte (P) in Buchformat derart geprüft und geändert wird, dass die Produkte (P) in Buchformat mit dem jeweiligen Rücken (D) entlang einer vorgegebenen Seite (L1) des Förderflusses angeordnet sind, auf deren entgegengesetzter Seite (L2) die Verpackungsstation arbeitet.

25. Verpackungs- und/oder Einlegeverfahren nach Anspruch 24, **dadurch gekennzeichnet, dass** der Vorgang im Herstellen einer Öffnung im Bündel und im Einführen mindestens einer Beilage in diese Öffnung besteht.

## Revendications

1. Dispositif (10) pour commander et modifier l'orientation de produits (P) en format livre acheminés dans un flux de transport continu l'un après l'autre et à une distance l'un de l'autre dans un sens de déplacement (A) suivant une direction de transport (T), comprenant :
- des moyens de détection (11) pour détecter des données identifiant l'orientation de chacun desdits produits (P) en format livre par rapport audit sens de déplacement (A) suivant ladite direction de transport (T),
- un ensemble fonctionnel (12) agencé pour modifier l'orientation de chacun desdits produits (P) en format livre individuellement par rapport audit sens de déplacement (A) suivant ladite direction de transport (T) durant leur transport dans ledit flux continu, et
- une unité de commande (13) pour commander ledit ensemble fonctionnel (12) en fonction des données identifiant l'orientation de chacun desdits produits (P) en format livre détectées par lesdits moyens de détection (11), ledit dispositif (10) étant **caractérisé en ce que** ledit ensemble fonctionnel (12) comprend au moins des premiers moyens de manipulation (15) configurés de manière à faire tourner chacun desdits produits (P) en format livre individuellement durant le transport dans ledit flux de transport continu d'un premier angle de rotation (α) sur un plan parallèle audit flux de transport et des deuxièmes moyens de manipulation (16), qui sont installés en aval, par rapport audit sens de déplacement (A), desdits premiers moyens de manipulation (15) et qui sont configurés de manière à faire tourner chacun desdits produits (P) en format livre individuellement durant le transport dans ledit flux de transport continu d'un deuxième angle de rotation (β) sur un plan parallèle audit flux de transport dans le même sens que la rotation produite par lesdits premiers moyens de manipulation (15), dans lequel chacun dudit premier angle (α) et dudit deuxième angle (β) a une amplitude de 90°.

2. Dispositif (10) selon la revendication 1, **caractérisé en ce que** chacun desdits premiers moyens de manipulation (15) et desdits deuxièmes moyens de manipulation (16) comprend une paire de dispositifs de transport (17a, 18a ; 17b, 18b) pour transporter lesdits produits (P) en format livre suivant ladite direction de transport (T), lesdits dispositifs de transport (17a, 18a ; 17b, 18b) étant agencés sur les côtés opposés (L2, L1) dudit flux de transport pour transporter, conjointement et simultanément, un produit (P) en format livre individuel, dans lequel chacun des dispositifs de transport (17a, 18a ; 17b, 18b) de chaque dite paire est associé à des moyens de motorisation respectifs (19a, 20a ; 19b, 20b) qui sont commandés par ladite unité de commande (13) aux mêmes vitesses ou à des vitesses qui sont différentes, de grandeur et/ou de direction, respectivement pour faire avancer ledit produit (P) en format livre individuel dans ledit sens de déplacement (A) suivant ladite direction de transport (T) en maintenant inchangée l'orientation de celui-ci ou pour le faire tourner respectivement dudit premier ou deuxième angle (α ; β).

3. Dispositif (10) selon la revendication 2, **caractérisé en ce que** lesdits dispositifs de transport (17a, 18a ; 17b, 18b) de chaque dite paire sont agencés symétriquement par rapport à l'axe longitudinal dudit flux de transport.

4. Dispositif (10) selon la revendication 2 ou 3, **caractérisé en ce que** chacun desdits dispositifs de transport (17a, 18a ; 17b, 18b) de chaque dite paire comprend une paire de rouleaux tournant en sens opposé (170a, 171a ; 180a, 181a ; 170b, 171b ; 180b, 181b) qui sont supportés d'une manière rotative autour d'un axe de rotation respectif transversal à ladite direction de transport (T) et qui sont agencés un au-dessus de l'autre pour former un passage de type calandre pour ledit flux de transport.

5. Dispositif (10) selon une ou plusieurs des revendications 2 à 4, **caractérisé en ce qu'**il comprend un transporteur continu avec trois courroies (42, 43, 44) qui sont agencées parallèles entre elles et l'une à côté de l'autre à une distance l'une de l'autre, dans lequel un dispositif de transport respectif (17a, 18a ; 17b, 18b) de chaque dite paire est placé dans l'espace défini entre deux courroies successives (42, 43 ; 43, 44).

6. Dispositif (10) selon une ou plusieurs des revendications précédentes, **caractérisé en ce que** ledit ensemble fonctionnel (12) comprend des premiers éléments stabilisateurs (47) pour stabiliser l'orientation de chacun desdits produits (P) en format livre, lesdits premiers éléments stabilisateurs (47) étant agencés en aval, par rapport audit sens de déplacement (A), desdits premiers moyens de manipulation (15).

7. Dispositif (10) selon une ou plusieurs des revendications précédentes, **caractérisé en ce que** ledit ensemble fonctionnel (12) comprend des deuxièmes éléments stabilisateurs (48) pour stabiliser l'orientation de chacun desdits produits (P) en format livre, lesdits deuxièmes éléments stabilisateurs (48) étant agencés en aval, par rapport audit sens de déplacement (A), desdits deuxièmes moyens de manipulation (16).

8. Dispositif (10) selon une ou plusieurs des revendications précédentes, **caractérisé en ce que** lesdits moyens de détection (11) comprennent des moyens d'acquisition pour acquérir au moins une image de chacun desdits produits (P) en format livre.

9. Dispositif (10) selon une ou plusieurs des revendications précédentes, **caractérisé en ce qu'**il comprend des moyens de mémoire (14) pour stocker les données identifiant une ou plusieurs orientations de référence desdits produits (P) en format livre par rapport audit sens de déplacement (A) suivant ladite direction de transport (T), lesdits moyens de mémoire (14) étant associés à ladite unité de commande (13).

10. Dispositif (10) selon une ou plusieurs des revendications précédentes, **caractérisé en ce que** chacun desdits produits (P) en format livre comprend un fascicule de feuilles, qui a une face avant (F1), une face arrière (F2), un dos (D) et le côté (G) opposé audit dos qui est ouvert, chacun desdits produits (P) en format livre étant disposé avec ledit dos (D) et ledit côté opposé (G) parallèles audit flux de transport.

11. Machine d'insertion et/ou de conditionnement (100) pour des produits (P) en format livre, comprenant un ensemble d'alimentation (101) pour alimenter lesdits produits (P) en format livre l'un après l'autre et à une distance l'un de l'autre sur un premier transporteur continu (102) ayant une extrémité d'entrée et une extrémité de sortie (102'), un dispositif (10) selon une ou plusieurs des revendications précédentes pour commander et modifier l'orientation des produits en format livre du flux de transport continu sortant dudit premier transporteur (102), et un deuxième transporteur continu (103) pour enlever les produits (P) sortant dudit dispositif (10) et le long duquel est agencé au moins un ensemble de conditionnement et/ou d'insertion (104).

12. Machine d'insertion et/ou de conditionnement (100) selon la revendication 11, **caractérisée en ce que** lesdits produits (P) en format livre comprennent chacun un fascicule de feuilles qui a une face avant (F1), une face arrière (F2), un dos (D) et le côté (G) opposé audit dos qui est ouvert et sont alimentés par ledit ensemble d'alimentation (101) avec ledit dos (D) et ledit côté opposé (G) parallèles à la direction de transport (T) définie par ledit premier transporteur (102), dans laquelle ledit ensemble de conditionnement (104) est agencé sur un côté (L2) dudit deuxième transporteur (103) et ledit dispositif (10) pour orienter lesdits produits en format livre est prédisposé pour orienter lesdits produits (P) en format livre avec le dos respectif (D) orienté le long du côté (L1) dudit deuxième transporteur continu (103) opposé à celui (L2) le long duquel est agencé ledit ensemble de conditionnement et/ou d'insertion (104).

13. Machine d'insertion et/ou de conditionnement (100) selon la revendication 12, **caractérisée en ce que** ledit ensemble de conditionnement et/ou d'insertion (104) comprend des moyens pour ouvrir (109) ledit fascicule et des moyens pour insérer (110) au moins un insert dans ladite ouverture.

14. Machine d'insertion et/ou de conditionnement (100) selon une ou plusieurs des revendications 11 à 13, **caractérisée en ce que** ladite unité de commande (13) commande ledit au moins un ensemble de conditionnement et/ou d'insertion (104) en fonction des données identifiant l'orientation de chacun desdits produits (P) en format livre détectée par lesdits moyens de détection.

15. Procédé pour commander et modifier l'orientation de produits (P) en format livre acheminés dans un flux de transport continu l'un après l'autre et à une distance l'un de l'autre dans un sens de déplacement (A) suivant une direction de transport (T), comprenant les étapes suivantes :
- la détection des données identifiant l'orientation de chacun desdits produits (P) en format livre par rapport audit sens de déplacement (A) suivant ladite direction de transport (T) avec des moyens de détection (11),
- le traitement des données détectées identifiant l'orientation de chacun desdits produits (P) en format livre pour les comparer avec les données identifiant une série d'orientations de référence desdits produits (P) en format livre par rapport audit sens de déplacement (A) suivant ladite direction de transport (T) et stockées dans des moyens de mémoire (14) avec une unité de commande (13) en communication avec lesdits moyens de mémoire (14), dans lequel ladite série comprend au moins une orientation de référence désirée desdits produits en format livre,
- si les données détectées identifiant l'orientation du produit actuel (P) en format livre diffère des données identifiant ladite au moins une orientation de référence désirée, la génération avec ladite unité de commande (13) d'un signal de commande en entrée sur un ensemble fonctionnel (12) qui est prédisposé pour modifier l'orientation de chacun desdits produits (P) en format livre respectivement pour modifier l'orientation du produit actuel (P) en format livre ou d'un signal pour le rejet successif dudit produit actuel (P) en format livre,
- dans lequel lesdites étapes se produisent en temps réel durant le transport continu desdits produits (P) en format livre dans ledit flux de transport, dans lequel ladite étape de modification de l'orientation dudit produit (P) en format livre comprend les étapes suivantes :
- le fait de faire effectuer audit produit (P) en format livre une première rotation d'un premier angle (α) sur un plan parallèle audit flux de transport et
- le fait de faire effectuer audit produit (P) en format livre une deuxième rotation, successive à et dans le même sens que ladite première rotation, d'un deuxième angle (β) sur un plan parallèle audit flux de transport, dans lequel
chacun dudit premier angle (α) et dudit deuxième angle (β) a une amplitude de 90°.

16. Procédé selon la revendication 15, **caractérisé en ce que** chacune desdites étapes consiste à différencier, en grandeur et/ou en sens, la vitesse de déplacement suivant ladite direction de transport (T) au niveau d'au moins deux portions dudit produit (P) en format livre, lesdites au moins deux portions étant disposées à proximité des côtés opposés (L1, L2) dudit flux de transport.

17. Procédé selon la revendication 16, **caractérisé en ce que** lesdites deux portions sont disposées symétriquement par rapport à l'axe longitudinal dudit flux de transport.

18. Procédé selon une ou plusieurs des revendications 15 à 17, **caractérisé en ce qu'**il comprend en outre la stabilisation de l'orientation de chacun desdits produits (P) en format livre après ladite première rotation.

19. Procédé selon une ou plusieurs des revendications 15 à 18, **caractérisé en ce qu'**il comprend en outre la stabilisation de l'orientation de chacun desdits produits (P) en format livre après ladite deuxième rotation.

20. Procédé selon une ou plusieurs des revendications 15 à 19, **caractérisé en ce que** ladite détection comprend l'acquisition d'au moins une image de chacun desdits produits (P) en format livre, dans lequel les données identifiant ladite série d'orientations de référence comprennent des images correspondantes desdits produits en format livre dans lesdites orientations de référence respectives.

21. Procédé selon une ou plusieurs des revendications 15 à 20, **caractérisé en ce que** ladite série d'orientations de référence comprend en outre une ou plusieurs orientations de référence indésirables.

22. Procédé selon la revendication 21, **caractérisé en ce que** lesdits produits (P) en format livre comprennent chacun un fascicule de feuilles qui a une face avant (F1), une face arrière (F2), un dos (D) et le côté (G) opposé audit dos qui est ouvert et sont disposés avec ledit dos (D) et ledit côté opposé (G) parallèles à ladite direction de transport (T) et dans lequel, dans ladite au moins une orientation désirée, ledit dos (D) est disposé le long d'un côté prédéterminé (L1) dudit flux de transport.

23. Procédé pour conditionner des produits (P) en format livre et/ou pour insérer des inserts dans lesdits produits (P) en format livre, comprenant les étapes suivantes :
- l'alimentation desdits produits (P) en format livre l'un après l'autre et à une distance l'un de l'autre dans un flux de transport,
- la commande et la modification de l'orientation desdits produits (P) en format livre avec un procédé pour commander et modifier l'orientation desdits produits en format livre selon une ou plusieurs des revendications 15 à 22, et
- l'enlèvement des produits (P) en format livre ainsi commandés et orientés vers une station de conditionnement, dans lequel au moins une opération de conditionnement est effectuée.

24. Procédé de conditionnement et/ou d'insertion selon la revendication 23, dans lequel lesdits produits (P) en format livre comprennent chacun un fascicule de feuilles qui a une face avant (F1), une face arrière (F2), un dos (D) et le côté (G) opposé audit dos qui est ouvert et sont alimentés avec ledit dos (D) et ledit côté opposé (G) parallèles à la direction de transport (T) dudit flux de transport, et dans lequel l'orientation desdits produits (P) en format livre est commandée et modifiée de manière que lesdits produits (P) en format livre soient disposés avec le dos respectif (D) orienté suivant un côté prédéterminé (L1) dudit flux de transport, du côté opposé (L2) sur lequel opère ladite station de conditionnement.

25. Procédé de conditionnement et/ou d'insertion selon la revendication 24, **caractérisé en ce que** ladite opération consiste à former une ouverture dans ledit fascicule et insérer au moins un insert dans ladite ouverture.
